# EUROPEAN PATENT SPECIFICATION

(11) **EP 4 224 039 B1**
(45) Date of publication and mention of the grant of the patent: **30.07.2025**
(21) Application number: 23151628.7
(22) Date of filing: 13.01.2023
(51) Int. Cl.: F16H 63/18, F16H 61/24, F16H 63/30, F16H 57/02

(54) **VEHICLE TRANSMISSION**
FAHRZEUGGETRIEBE
TRANSMISSION DE VÉHICULE

(30) Priority: 04.02.2022 JP 2022016537
(43) Date of publication of application: 09.08.2023
(73) Proprietor: Suzuki Motor Corporation, Hamamatsu-shi, Shizuoka 432-8611 (JP)
(72) Inventor: EGUCHI, Hiroyuki, Hamamatsu-shi, 432-8611 (JP); TAKENAKA, Hiromitsu, Hamamatsu-shi, 432-8611 (JP)
(74) Representative: Plasseraud IP

(56) References cited:
- WO-A1-2013/121278
- DE-A1- 102019 006 118
- JP-A- 2015 081 631
- JP-B2- 6 786 923
- JP-B2- 7 119 784

## Description

### [Technical Field]

This invention relates to a vehicle transmission.

### [Background of the Invention]

A vehicle transmission is known in which insertion members such as an input shaft and an output shaft are held on the same line and assembled to a transmission case (see JP H11-303952 A).
Patent documents DE 10 2019 006118 A1, JP 2015 081631 A and JP 6786923 B2 are other examples of vehicles mechanical transmissions.

In the vehicle transmission, a tip of the output shaft is inserted into a bearing hole provided in the input shaft and a pilot bearing is sandwiched therebetween to hold both shafts on the same axis. A guide pipe slidably and rotatably inserted into a guide hole provided at the tip of the output shaft is provided at the center of the bearing hole.

A tip of the guide pipe is located closer to the output shaft than an outer end of the pilot bearing and both shafts are positioned by the guide pipe and the guide hole. Then, the tip of the output shaft is allowed to enter the bearing hole.

### [Prior Art]

### [Patent Literature]

[Patent Literature 1] JP H11-303952 A

### [Summary of the Invention]

### [Problem to be solved by the Invention]

However, in the vehicle transmission described in Patent Literature 1, the tip of the output shaft is allowed to enter the bearing hole after both shafts are positioned by the guide pipe and the guide hole, but in a state before the guide pipe enters the guide hole, the input shaft and the output shaft cannot be positioned on the same axis.

Therefore, an operator still needs to rely on intuition to position the guide pipe and the output shaft on the same axis and the work of assembling the input shaft and the output shaft to the transmission case becomes troublesome.

Further, since the guide pipe and the guide hole described in Patent Literature 1 cannot position the input shaft and the output shaft in the rotation direction, it is difficult to stabilize the posture at a desired position in the rotation direction and to assemble the input shaft and the output shaft into the transmission case.

This invention has been made in view of the above-described circumstances and an object of this invention is to provide a vehicle transmission capable of regulating a change in posture of an insertion member when the insertion member is inserted into a transmission case and improving an assembly property of the insertion member with respect to the transmission case.

### [Means to solve the problem]

According to aspects of this invention, there is provided a vehicle transmission according to claim 1 or 2.

### [Effect of the Invention]

In this way, according to this invention, it is possible to regulate a change in posture of an insertion member when the insertion member is inserted into a transmission case and to improve an assembly property of the insertion member with respect to the transmission case.

### [Brief description of figures]

[Fig. 1] Fig. 1 is a longitudinal sectional view in which a vehicle transmission according to a first embodiment not part of this invention is cut along an axis of a shift/select shaft.
[Fig. 2] Fig. 2 is a plan view of a transmission case in the periphery of an opening portion showing a relationship with an interlock plate, as a figure showing the vehicle transmission according to the first embodiment not part of this invention.
[Fig. 3] Fig. 3 is a cross-sectional view when viewed from a direction III-III of Fig. 2.
[Fig. 4] Fig. 4 is a view showing a state in the middle of assembly in which the shift/select shaft is inserted into the transmission case through the opening portion, as a figure showing the vehicle transmission according to the first embodiment not part of this invention.
[Fig. 5] Fig. 5 is a plan view of a transmission case in the periphery of an opening portion showing a relationship with an interlock plate, as a figure showing a vehicle transmission according to a second embodiment, part of this invention.
[Fig. 6] Fig. 6 is a plan view of a transmission case in the periphery of an opening portion showing a relationship with an interlock plate, as a figure showing a vehicle transmission according to a third embodiment, part of this invention.

A vehicle transmission according to embodiments of this invention includes: a transmission case having an opening portion; and an insertion member inserted into the transmission case through the opening portion, in which the transmission case includes at least one engagement portion provided inside the transmission case and engaging with the insertion member and a guide portion provided inside the transmission case to be located closer to the opening portion than the engagement portion, and in which a change in posture of the insertion member is regulated in such a manner that the insertion member comes into contact with the guide portion before the insertion member engages with the engagement portion when the insertion member is inserted into the transmission case through the opening portion.

Accordingly, the vehicle transmission according to embodiments of this invention can regulate a change in posture of the insertion member when the insertion member is inserted into the transmission case and improve the assembly property of the insertion member with respect to the transmission case.

### [Embodiments]

Hereinafter, a vehicle transmission according to embodiments of this invention will be described with reference to the drawings.

### (First embodiment not part of the invention)

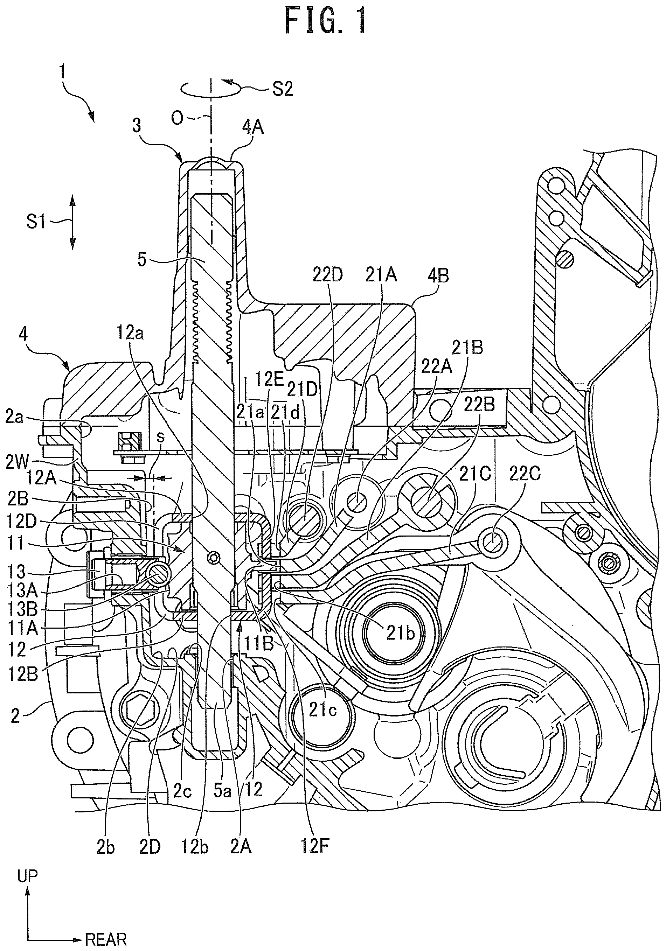

Figs. 1 to 4 are views showing a vehicle transmission according to a first embodiment.

In Figs. 1 to 4, the up, down, front, rear, left, and right directions are based on the vehicle transmission installed in the vehicle, the front and rear direction of the vehicle is the front and rear direction, the left and right direction of the vehicle (vehicle width direction) is the left and right direction, and the up and down direction of the vehicle (the height direction of the vehicle) is the up and down direction.

First, a configuration will be described.

A transmission 1 mounted on a vehicle is composed of, for example, an AMT (Automated Manual Transmission), converts a rotation speed and a rotation torque of an internal combustion engine (not shown) in response to a vehicle travel state, and transmits them to drive wheels (not shown).

A transmission 1 includes a transmission case 2 and an opening portion 2a is formed at an upper portion of the transmission case 2. The transmission case 2 is provided with components constituting the transmission 1 such as a shift device 3 and a speed change gear mechanism (not shown).

The shift device 3 includes a shift case 4 and the shift case 4 includes a cylindrical accommodation portion 4A and a fixing portion 4B fixed to the upper portion of the transmission case 2 by a bolt (not shown).

The shift case 4 closes the opening portion 2a of the transmission case 2 and the fixing portion 4B is fixed to the circumferential edge of the opening portion 2a by a bolt.

The shift case 4 is attached to the transmission case 2 through a seal member (not shown) and the opening portion 2a of the transmission case 2 is hermetically closed by the seal member. Accordingly, foreign matter is prevented from entering the transmission case 2 through the opening portion 2a and lubricating oil stored inside the transmission case 2 is prevented from leaking to the outside.

A shift/select shaft 5 is accommodated inside the transmission case 2. The upper portion of the shift/select shaft 5 is supported by the shift case 4. The shift/select shaft 5 is a shaft member which constitutes an insertion member inserted through the opening portion 2a of the transmission case 2 and disposed and attached inside the transmission case 2.

The shift/select shaft 5 moves in the direction of the axis O with respect to the shift case 4 in accordance with a select operation and rotates around the axis O with respect to the shift case 4 in accordance with a shift operation. Additionally, the insertion member is an assembly of the shift/select shaft 5 and a component attached to the shift/select shaft 5 and is a portion inserted from the opening portion 2a into the transmission case 2. Further, the insertion component is a component constituting the insertion member.

The axis of the shift/select shaft 5 is indicated by O. Additionally, the direction of the axis O of the shift/select shaft 5 is also referred to as the axial direction of the shift/select shaft 5.

In Fig. 1, the movement of the shift/select shaft 5 in the axial direction is indicated by a select direction S1 and the rotation of the shift/select shaft 5 around the axis O is indicated by a shift direction S2.

The upper end side of the shift/select shaft 5 is supported by the accommodation portion 4A of the shift case 4 and the shift/select shaft 5 is supported by the accommodation portion 4A to be axially movable and rotatable.

An engagement portion 2A consisting of a hole into which a lower end portion 5a of the shift/select shaft 5 is inserted is provided below the opening portion 2a of the transmission case 2 and the shift/select shaft 5 is supported by the engagement portion 2A to be axially movable and rotatable. Hereinafter, the engagement position between the lower end portion 5a of the shift/select shaft 5 and the engagement portion 2A may be referred to as a "first engagement portion".

Further, the engagement of the lower end portion 5a of the shift/select shaft 5 with respect to the engagement portion 2A is referred to as first engagement. Further, the lower end portion 5a of the shift/select shaft 5 constitutes the end portion of the insertion member.

That is, the lower end portion 5a of the shift/select shaft 5 is supported at the first engagement portion by the shift case 4 and the transmission case 2 to be axially movable and rotatable around the axis O.

The shift case 4 is provided with a select actuator and a shift actuator (not shown) and the select actuator and the shift actuator operate the shift/select shaft 5 in the select direction S1 or the shift direction S2.

A cam member 11 is fixed to the shift/select shaft 5 and the cam member 11 moves together with the shift/select shaft 5.

The cam member 11 includes a cam surface 11A, a finger portion 11B which protrudes in a direction orthogonal to the axial direction of the shift/select shaft 5 from a surface opposite to the cam surface 11A, and a guide groove (not shown) which is formed on a surface orthogonal to the cam surface 11A.

A first-speed/second-speed stage shift yoke 21A, a third-speed/fourth-speed stage shift yoke 21B, a fifth-speed/sixth-speed stage shift yoke 21C, and a backward shift yoke 21D are arranged in the transmission 1 in an overlapping manner.

The finger portion 11B is fitted to any one of the first-speed/second-speed stage shift yoke 21A, the third-speed/fourth-speed stage shift yoke 21B, the fifth-speed/sixth-speed stage shift yoke 21C, and the backward shift yoke 21D and swings about the axis O of the shift/select shaft 5 so that any one of the shift yokes 21A, 21B, 21C, and 21D is moved by the swing of the finger portion 11B.

The shift yokes 21A, 21B, 21C, and 21D are formed in a U shape in the top plan view and are fitted to the finger portion 11B to sandwich the finger portion 11B in the left and right direction.

That is, notch grooves 21a, 21b, 21c, and 21d are formed by notching the center portions of the shift yokes 21A, 21B, 21C, and 21D in the left and right direction in the top plan view. Accordingly, the shift yokes are formed in a U shape to open toward the shift/select shaft 5 and the finger portion 11B enters the notch grooves 21a, 21b, 21c, and 21d so that the finger portion 11B and the shift yokes 21A, 21B, 21C, and 21D are fitted to each other. The transmission 1 of this embodiment is a transmission with six forward speed stages. Additionally, the gear stage is not limited to the six speed stages.

An interlock plate 12 is attached to the lower portion of the shift/select shaft 5 to surround the cam member 11. Since the shift/select shaft 5 is disposed to penetrate the interlock plate 12 and cannot move in the axial direction of the shift/select shaft 5 by the cam member 11 disposed therein, the interlock plate 12 moves in the axial direction together with the shift/select shaft 5 and rotates relative to the shift/select shaft 5.

In the interlock plate 12, an upper wall 12A and a lower wall 12B allowing the perpendicular penetration of the shift/select shaft 5 disposed inside the transmission case 2 to be vertical to the axis O extend in the horizontal direction and the horizontal width of the interlock plate 12 is formed to be longer than the diameter of the shift/select shaft 5.

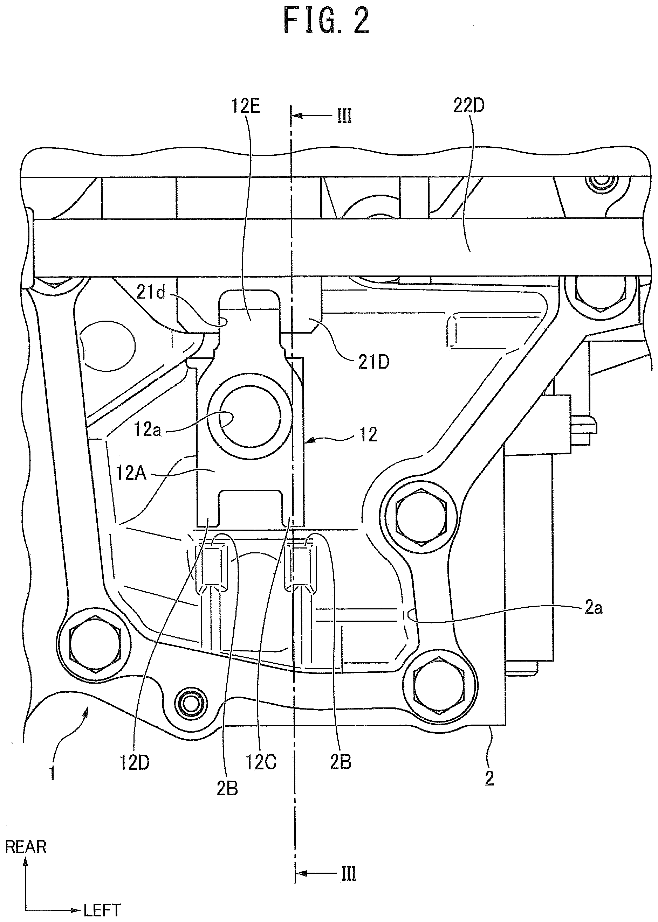

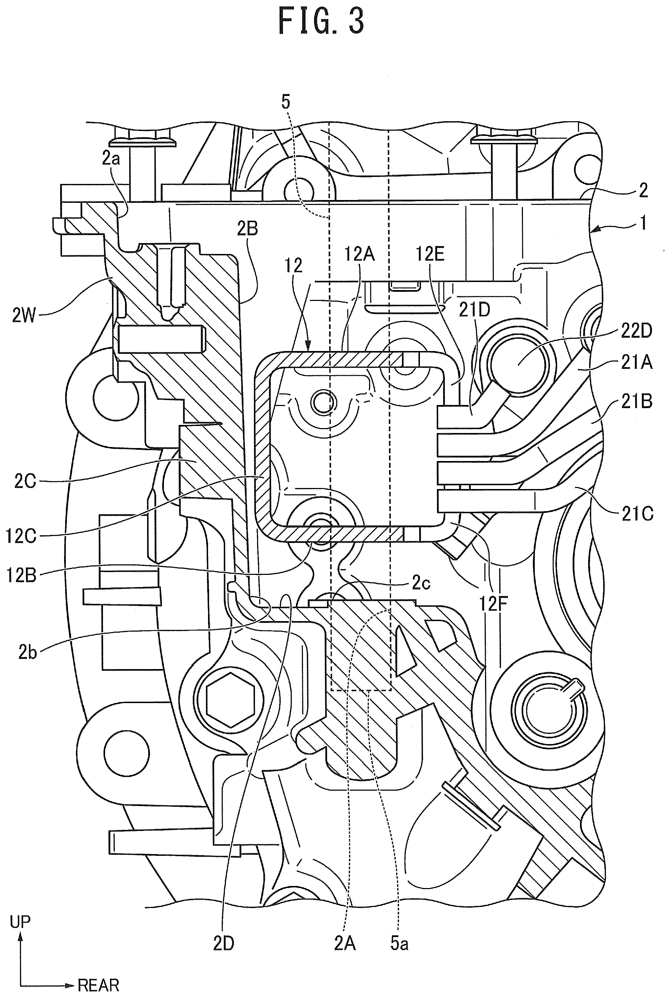

As shown in Figs. 1 and 2, the interlock plate 12 includes the upper wall 12A, the lower wall 12B, a left front wall 12C (see Fig. 3) which connects the left front end portion of the upper wall 12A and the left front end portion of the lower wall 12B and extends in the up and down direction, a right front wall 12D which connects the right front end portion of the upper wall 12A and the right front end portion of the lower wall 12B and extends in the up and down direction, an upper rear wall 12E which is bent downward from the rear end portion of the upper wall 12A and extends toward the finger portion 11B, and a lower rear wall 12F which is bent upward from the rear end portion of the lower wall 12B and extends toward the finger portion 11B.

Then, the finger portion 11B is disposed in a slit 12d between the upper end of the lower rear wall 12F and the lower end of the upper rear wall 12E disposed to face each other. Further, the upper rear wall 12E, the lower rear wall 12F, and the finger portion 11B are arranged in the notch grooves 21a, 21b, 21c, and 21d (see Fig. 1) of the shift yokes 21A, 21B, 21C, and 21D in an assembled state of the shift/select shaft 5.

That is, the upper rear wall 12E and the lower rear wall 12F of the interlock plate 12 engage with the notch grooves 21a, 21b, 21c, and 21d of the shift yokes 21A, 21B, 21C, and 21D. Then, the engagement position between the lower rear wall 12F of the interlock plate 12 and the notch groove 21d of the shift yoke may be referred to as a "second engagement portion".

That is, the lower rear wall 12F of the interlock plate 12 is a portion which first engages with the notch groove of the shift yoke, the notch groove 21d of the shift yoke is a portion which is located closest to the opening portion 2a and first engages with the interlock plate 12, and the first engagement position of the interlock plate 12 with respect to the shift yokes 21A, 21B, 21C, and 21D is referred to as a "second engagement portion".

Further, the engagement of the interlock plate 12 with respect to the shift yokes 21A, 21B, 21C, and 21D is referred to as a second engagement.

As shown in Fig. 2, the left front wall 12C and the right front wall 12D are separated from each other in the left and right direction and are arranged side by side in the left and right direction. Specifically, the left front wall 12C and the right front wall 12D are arranged separately on the right side and the left side with respect to the shift/select shaft 5 and are arranged at substantially the same distance from the shift/select shaft 5 in the left and right direction.

Further, in a state in which the shift/select shaft 5 is assembled to the transmission case 2, a detent member 13 to be described later is inserted and disposed between the left front wall 12C and the right front wall 12D and the detent member 13 comes into contact with the left front wall 12C or the right front wall 12D to regulate the position of the interlock plate 12 in the rotation direction.

As shown in Fig. 1, through-holes 12a and 12b are formed in the upper wall 12A and the lower wall 12B and the shift/select shaft 5 is inserted through the through-holes 12a and 12b.

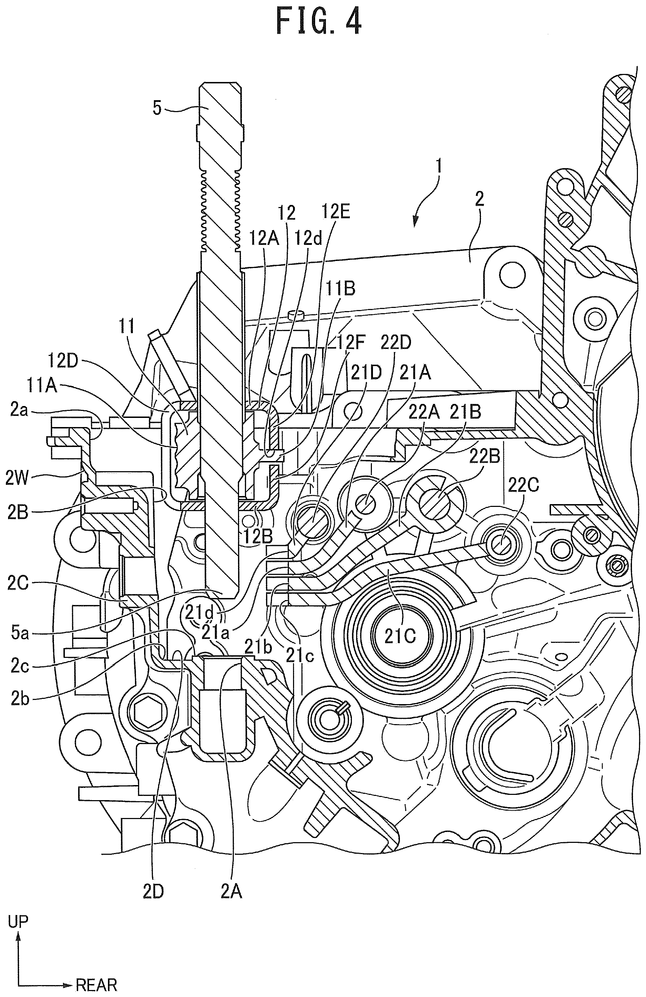

The slit 12d (see Fig. 4) which extends in the horizontal direction is formed between the upper rear wall 12E and the lower rear wall 12F of the interlock plate 12. The tip of the finger portion 11B protrudes toward the outside of the interlock plate 12 through the slit 12d and the finger portion 11B is fitted to any one of the shift yokes 21A, 21B, 21C, and 21D.

When the finger portion 11B is fitted to any one of the shift yokes 21A, 21B, 21C, and 21D, the other three of the shift yokes 21A, 21B, 21C, and 21D engage with the upper rear wall 12E and the lower rear wall 12F of the interlock plate 12 and not fitted to the finger portion 11B.

That is, three shift yokes not fitted to the finger portion 11B among the shift yokes 21A, 21B, 21C, and 21D are maintained at a neutral position while engaging with the upper rear wall 12E or the lower rear wall 12F of the interlock plate 12 which is located at a position deviating from the slit 12d in the axial direction of the shift/select shaft 5 and is regulated in the rotational position by the detent member 13. Accordingly, it is possible to prevent two speed stages from being achieved simultaneously within the transmission.

The shift device 3 selects one shift yoke fitted to the finger portion 11B when the shift/select shaft 5 moves in the select direction S1.

Then, when the shift/select shaft 5 rotates in the shift direction S2, a shift fork (not shown) connected to one shift yoke fitted to the finger portion 11B of the cam member 11 operates a synchronizer (not shown) so that a gear pair constituting an arbitrary gear stage is connected to be able to transmit power and the shift range is switched, that is, the gear is changed.

In Fig. 1, the shift yoke 21A is connected to the first-speed/second-speed stage shift shaft 22A and the first-speed/second-speed stage shift fork is connected to the first-speed/second-speed stage shift shaft 22A.

The shift yoke 21B is connected to the third-speed/fourth-speed stage shift shaft 22B and the third-speed/fourth-speed stage shift fork is connected to the third-speed/fourth-speed stage shift shaft 22B.

The shift yoke 21C is connected to the fifth-speed/sixth-speed stage shift shaft 22C and the fifth-speed/sixth-speed stage shift fork is connected to the fifth-speed/sixth-speed stage shift shaft 22C.

The shift yoke 21D is connected to the backward shift shaft 22D and the backward shift fork is connected to the backward shift shaft 22D.

The upper and lower surfaces of the cam member 11 contact the upper wall 12A and the lower wall 12B of the interlock plate 12 and the interlock plate 12 does not move relatively in the axial direction of the shift/select shaft 5.

A guide groove (not shown) formed on the outer peripheral surface of the cam member 11 is composed of a plurality of shift gate patterns arranged at the same pattern as the shift pattern and a guide pin (not shown) is inserted into the guide groove.

As the shift/select shaft 5 moves in the select direction S1 and rotates in the shift direction S2, the guide groove moves. At this time, since the guide pin is inserted into the guide groove, the guide groove (cam member 11) moves while being regulated by the guide pin and the guide pin comes into contact with the wall surface of the guide groove after the shift ends (the gear shift ends).

Accordingly, the movement amount of the shift/select shaft 5 in the select direction S1 and the shift direction S2 is regulated and the rattling or unnecessary movement of the shift/select shaft 5 in the select direction S1 and the shift direction S2 is prevented.

A guide wall 2B is formed in a front wall 2W of the transmission case 2 facing the cam surface 11A of the cam member 11 and a boss portion 2C is provided in the guide wall 2B. The shift/select shaft 5 of this embodiment constitutes the shaft member, the shift/select shaft 5 and the interlock plate 12 constitute the insertion member, and the interlock plate 12 is the insertion component.

Further, the front wall 2W of the transmission case 2 constitutes the wall portion. That is, the insertion member is an assembly of the shift/select shaft 5 and the insertion component attached to the shift/select shaft 5 and is a portion inserted from the opening portion 2a and disposed inside the transmission case 2.

The detent member 13 is attached to the boss portion 2C. The detent member 13 includes a tubular body 13A which is attached to the boss portion 2C, a movable body 13B which is accommodated in the tubular body 13A, and a coil spring (not shown) which is accommodated in the tubular body 13A and presses the movable body 13B against the cam surface 11A.

The tip of the tubular body 13A of the detent member 13 is disposed to be sandwiched between the left front wall 12C and the right front wall 12D and is fitted to the slit between the left front wall 12C and the right front wall 12D.

The movable body 13B is located behind the left front wall 12C and the right front wall 12D and contacts the cam surface 11A.

The detent member 13 applies an operation force when the shift/select shaft 5 moves in the select direction S1 and the shift direction S2 in such a manner that the coil spring generates a pressing force that presses the movable body 13B against the cam surface 11A when the cam member 11 moves in the select direction S1 and the shift direction S2.

When the shift/select shaft 5 moves in the up and down direction, the interlock plate 12 moves in the up and down direction while the left front wall 12C and the right front wall 12D are regulated by the tubular body 13A. Accordingly, the interlock plate 12 is positioned in the rotation direction by the tubular body 13A to regulate the rotation of the interlock plate 12.

The guide wall 2B is located above the engagement portion 2A and is located below the opening portion 2a. That is, the guide wall 2B is located between the opening portion 2a and the engagement portion 2A in the up and down direction.

The guide wall 2B is composed of a plane extending along the axis O of the shift/select shaft 5 and a lower end portion 2b of the guide wall 2B is connected to an upper end portion 2c of the engagement portion 2A via a lateral wall 2D. The guide wall 2B of this embodiment constitutes the guide portion and the lower end portion 2b of the guide wall 2B constitutes the lower end portion of the guide portion.

That is, the lower end portion 2b of the guide wall 2B and the upper end portion 2c of the engagement portion 2A are located at the same height position.

The left front wall 12C and the right front wall 12D of the interlock plate 12 facing the guide wall 2B are formed by planes parallel to the axis O of the shift/select shaft 5. That is, the left front wall 12C and the right front wall 12D of the interlock plate 12 are formed by planes parallel to the insertion direction of the shift/select shaft 5.

In a state in which the shift/select shaft 5 engages with the engagement portion 2A, a gap s is formed between the guide wall 2B and the left front wall 12C and the right front wall 12D of the interlock plate 12 of the shift/select shaft 5. That is, in a state in which the shift/select shaft 5 is attached to the transmission case 2, the insertion member does not come into contact with the guide portion and the interlock plate 12 which is the insertion component constituting the insertion member is separated from the guide wall 2B.

The guide wall 2B and the left front wall 12C and the right front wall 12D of the interlock plate 12 are formed on substantially parallel surfaces and as for the gap s (horizontal distance), the gap s below the detent member 13 is smaller than the gap s above the detent member 13.

That is, the guide wall 2B above the detent member 13 is slightly separated forward from the shift/select shaft 5 than the guide wall 2B below the detent member 13.

In the transmission 1, since the guide wall 2B comes into contact with the interlock plate 12 before the interlock plate 12 reaches the shift yokes 21A, 21B, 21C, and 21D (before the second engagement portion engages to be the second engagement) when the shift/select shaft 5 and the interlock plate 12 are inserted into the transmission case 2 along the up and down direction through the opening portion 2a, a change in posture of the shift/select shaft 5 and the interlock plate 12 is regulated.

Further, since the guide wall 2B comes into contact with the interlock plate 12 before the shift/select shaft 5 engages with the engagement portion 2A (before the first engagement portion engages to be the first engagement), a change in posture of the shift/select shaft 5 and the interlock plate 12 is regulated.

Then, the interlock plate 12 is smoothly inserted into the notch grooves 21a, 21b, 21c, and 21d ("second engagement portion") of the shift yokes 21A, 21B, 21C, and 21D and the shift/select shaft 5 is inserted into the engagement portion 2A ("first engagement portion").

The posture of the shift/select shaft 5 and the interlock plate 12 means the directions (tilts) and rotational positions of the shift/select shaft 5 and the interlock plate 12.

Further, the regulation of the change in posture of the shift/select shaft 5 and the interlock plate 12 means the regulation of the deviation from the normal position of the rotational position or the direction of the shift/select shaft 5 and the interlock plate 12.

Further, the regulation also means that the shift/select shaft 5 or the interlock plate 12 deviating from the normal position can be adjusted to the normal position by the assembly operator using the guide wall 2B.

When the rotational positions or the directions of the shift/select shaft 5 and the interlock plate 12 are located at the normal positions, the upper rear wall 12E and the lower rear wall 12F of the interlock plate 12 are normally fitted to the shift yokes 21A, 21B, 21C, and 21D at the "second engagement portion" without the interference when assembling the shift/select shaft 5 and hence the assembly can be performed normally.

However, when the shift/select shaft 5 does not take a normal posture and the shift/select shaft 5 is assembled to the transmission case 2 while the interlock plate 12 is tilted from the normal posture or rotated from the normal posture, the lower rear wall 12F of the interlock plate 12 interferes with the shift yokes 21A, 21B, 21C, and 21D and cannot enter the notch grooves 21a, 21b, 21c, and 21d. Then, the "second engagement portion" may not engage normally and the normal assembly is not easily performed.

Further, when the posture is not normal, the lower end portion 5a of the shift/select shaft 5 cannot enter the engagement portion 2A and the "first engagement portion" may not engage normally. Accordingly, the normal assembly is difficult.

Next, an operation will be described.

The shift case 4 is omitted in Fig. 4, but in the manufacturing process of the transmission 1, the shift/select shaft 5 and the interlock plate 12 which are integrated with each other are inserted into the transmission case 2 through the opening portion 2a. At this time, the shift/select shaft 5 and the shift case 4 are integrated.

If the postures of the shift/select shaft 5 and the interlock plate 12 change (deviate from the normal postures) due to the tilting of the shift/select shaft 5 or the rotation of the interlock plate 12 in the operation of inserting the shift/select shaft 5 and the interlock plate 12 into the transmission case 2 through the opening portion 2a and assembling them to the transmission case 2, the upper rear wall 12E and the lower rear wall 12F of the interlock plate 12 do not enter the notch grooves 21a, 21b, 21c, and 21d of the shift yokes 21A, 21B, 21C, and 21D. Further, when the posture is not normal, the lower end portion 5a of the shift/select shaft 5 cannot enter the engagement portion 2A.

Since the interlock plate 12 is rotatably assembled to the shift/select shaft 5 in a state before the assembly to the transmission case 2, there is a possibility that the interlock plate 12 may rotate with respect to the shift/select shaft 5 during the assembly of the shift/select shaft 5.

When the interlock plate 12 rotates with respect to the shift/select shaft 5, the upper rear wall 12E and the lower rear wall 12F of the interlock plate 12 and the notch grooves 21a, 21b, 21c, and 21d deviate in the rotation direction and the lower rear wall 12F of the interlock plate 12 interferes with the shift yokes 21A, 21B, 21C, and 21D and cannot enter the notch grooves 21a, 21b, 21c, and 21d. Specifically, the lower rear wall 12F which is the lower end of the interlock plate 12 and the shift yoke 21D closest to the opening portion 2a interfere with each other.

Therefore, when the interlock plate 12 rotates with respect to the shift/select shaft 5, the operator separates the shift/select shaft 5 from the transmission case 2 and tries to insert the interlock plate 12 again after correcting the posture thereof. Accordingly, since it is necessary to repeat the assembly work of the shift/select shaft 5 several times, it takes much time and effort for assembling the shift/select shaft 5. As a result, the assembly workability of the shift/select shaft 5 deteriorates.

According to the transmission 1 of this embodiment, the transmission case 2 includes a second engagement portion (the engagement position of the interlock plate 12 and the shift yokes 21A, 21B, 21C, and 21D) provided inside the transmission case 2 and engaging with the insertion member or a first engagement portion (the engagement position of the lower end portion 5a of the shift/select shaft 5 with respect to the engagement portion 2A) engaging with the insertion member and the guide wall 2B which is provided inside the transmission case 2 to be located closer to the opening portion 2a than the first engagement portion and the second engagement portion.

Then, the guide wall 2B is disposed to be able to come into contact with the interlock plate 12 before engaging with the notch grooves 21a, 21b, 21c, and 21d of the shift yokes 21A, 21B, 21C, and 21D. Further, the guide wall 2B is formed on the inner surface of the transmission case 2 to be able to come into contact with the interlock plate 12 before the lower end portion 5a of the shift/select shaft 5 engages with the engagement portion 2A.

Then, in the transmission 1 of this embodiment, when the shift/select shaft 5 having the interlock plate 12 assembled thereto is inserted into the transmission case 2 through the opening portion 2a, the interlock plate 12 comes into contact with the guide wall 2B to regulate a change in posture of the shift/select shaft 5 and the interlock plate 12 before the shift/select shaft 5 engages with the first engagement portion or the second engagement portion to be the first engagement and the second engagement.

That is, if the postures of the shift/select shaft 5 and the interlock plate 12 change when the shift/select shaft 5 and the interlock plate 12 are inserted into the transmission case 2 through the opening portion 2a, the interlock plate 12 comes into contact with the guide wall 2B.

Accordingly, it is possible to regulate a change in posture of the shift/select shaft 5 and the interlock plate 12, to guide the lower rear wall 12F of the interlock plate 12 to the notch grooves 21a, 21b, 21c, and 21d of the shift yokes 21A, 21B, 21C, and 21D, and to guide the lower end portion 5A of the shift/select shaft 5 to the engagement portion 2A in a normal posture.

That is, the operator can stabilize the postures and the positions of the shift/select shaft 5 and the interlock plate 12 by bringing the interlock plate 12 into contact with the guide wall 2B and the operator can correct the posture of the interlock plate 12 (the direction in the rotation direction) by bringing the interlock plate 12 into contact with the guide wall 2B. Accordingly, it is possible to remarkably improve the assembly workability.

Fig. 2 shows a state in which the upper rear wall 12E of the interlock plate 12 normally enters the notch groove 21d of the shift yoke 21D and in this state, the notch grooves 21a, 21b, 21c, and 21d of the shift yokes 21A, 21B, 21C, and 21D reliably engage with the upper rear wall 12E and the lower rear wall 12F of the interlock plate 12.

Since the upper portion of the engagement portion is covered and hidden by the shift case 4 in the assembly work, the operator cannot easily check the engagement portion. However, the guide wall 2B and the left front wall 12C and the right front wall 12D of the interlock plate 12 arranged in front of the operator can be relatively easily checked by the operator and the positions of the shift/select shaft 5 and the interlock plate 12 can be adjusted.

That is, according to the transmission 1 of this embodiment, the lower end portion 5a of the shift/select shaft 5 is provided in the transmission case 2 and the lower end portion 5a of the shift/select shaft 5 enters to be the first engagement.

Further, according to the transmission 1 of this embodiment, the interlock plate 12 is installed inside the transmission case 2 and the interlock plate 12 enters to be the second engagement.

In this way, in the transmission 1 of this embodiment, it is possible to regulate a change in direction or rotational posture of the shift/select shaft 5 and the interlock plate 12 by using the guide wall 2B provided in the transmission case 2 and to improve the assembly workability of the shift/select shaft 5 with respect to the transmission case 2.

As a result, it is possible to improve the reliability of the transmission 1 by normally fitting the finger portion 11B to the desired shift yokes 21A, 21B, 21C, and 21D at the time of shifting.

Additionally, the detent member 13 is attached to the boss portion 2C while the shift/select shaft 5 is attached to the engagement portion 2A and the interlock plate 12 takes a normal attachment posture not to contact the guide wall 2B.

Further, since the upper end of the guide wall 2B is formed closer to the opening portion 2a than the dimension of the interlock plate 12 in the up and down direction, the operator can check the contact state between the interlock plate 12 and the guide wall 2B from above at a visual check position while the shift/select shaft 5 is inserted into the transmission case 2 through the opening portion 2a.

Further, since the operator can easily correct the direction by bringing the interlock plate 12 into contact with the guide wall 2B when a problem is found in the direction or rotational posture of the interlock plate 12, it is possible to more effectively improve the assembly property of the shift/select shaft 5 to the transmission case 2.

Further, according to the transmission 1 of this embodiment, the guide wall 2B above the detent member 13 is slightly separated forward from the shift/select shaft 5 than the guide wall 2B below the detent member 13.

Accordingly, as the shift/select shaft 5 moves toward the engagement portion 2A, the interlock plate 12 can be moved toward the engagement portion 2A along the guide wall 2B and the axis O of the shift/select shaft 5 can easily match the center axis of the engagement portion 2A. Therefore, it is possible to smoothly insert the shift/select shaft 5 into the engagement portion 2A.

Further, according to the transmission 1 of this embodiment, the insertion direction of the shift/select shaft 5 is the direction along the axis O of the shift/select shaft 5. That is, the insertion direction is the vertical direction, which is easy for the operator to understand, and can improve workability.

When the engagement portion 2A engages with the shift/select shaft 5, the shift/select shaft 5 is supported to be rotatable about the axis O. Then, the guide wall 2B comes into contact with the interlock plate 12 to regulate a change in rotation position of the interlock plate 12.

In this way, it is possible to regulate a change in rotational posture of the shift/select shaft 5 and the interlock plate 12 by using the guide wall 2B provided in the transmission case 2 even when the shift/select shaft 5 is rotatably supported by the engagement portion 2A and to improve the assembly workability of the shift/select shaft 5 with respect to the transmission case 2.

Further, according to the transmission 1 of this embodiment, since the shift/select shaft 5 is composed of the shaft member extending in the insertion direction, it is necessary to move the shift/select shaft 5 in the up and down direction over a long distance until the shift/select shaft 5 is inserted into the transmission case 2 from the opening portion 2a and is engaged with the engagement portion 2A.

In the transmission 1 of this embodiment, since the interlock plate 12 comes into contact with the guide wall 2B before the shift/select shaft 5 engages with the engagement portion 2A when the shift/select shaft 5 having the interlock plate 12 assembled thereto is inserted into the transmission case 2 through the opening portion 2a, a change in posture of the shift/select shaft 5 and the interlock plate 12 is regulated.

Accordingly, it is possible to reliably regulate a change in posture of the interlock plate 12 attached to the elongated shift/select shaft 5.

Further, according to the transmission 1 of this embodiment, since the lower end portion 2b of the guide wall 2B and the upper end portion 2c of the engagement portion 2A are located at the same height position, the interlock plate 12 can be guided to the vicinity of the engagement portion 2A along the guide wall 2B when the shift/select shaft 5 is inserted into the transmission case 2 through the opening portion 2a.

Therefore, it is possible to more effectively regulate a change in posture of the shift/select shaft 5 and the interlock plate 12.

Further, according to the transmission 1 of this embodiment, the left front wall 12C and the right front wall 12D of the interlock plate 12 have planes extending along the insertion direction of the shift/select shaft 5 and the guide wall 2B is composed of a plane extending in parallel to the left front wall 12C and the right front wall 12D.

Accordingly, it is possible to more effectively regulate the postures of the shift/select shaft 5 and the interlock plate 12 by the surface contact of the left front wall 12C and the right front wall 12D of the interlock plate 12 with respect to the guide wall 2B when the shift/select shaft 5 and the interlock plate 12 are inserted into the transmission case 2 through the opening portion 2a.

As a result, it is possible to more effectively improve the assembly property of the shift/select shaft 5 to the transmission case 2.

### (Second embodiment)

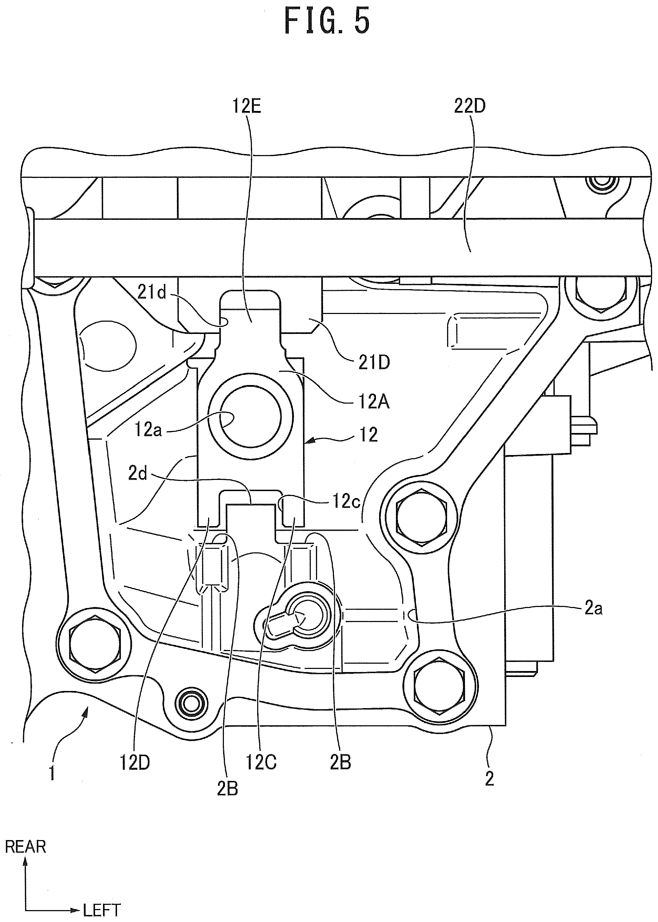

Fig. 5 is a view showing a vehicle transmission according to a second embodiment, which is part of this invention, wherein the same numbers are given to the same configurations as in the first embodiment, and the description thereof is omitted.

As shown in Fig. 5, a protrusion portion 2d is formed in the guide wall 2B. The protrusion portion 2d protrudes from the guide wall 2B toward the interlock plate 12 and extends in the up and down direction along the axis O of the shift/select shaft 5.

The protrusion portion 2d enters between the left front wall 12C and the right front wall 12D and the interlock plate 12 is movable along the protrusion portion 2d.

That is, a groove portion 12c is formed in the interlock plate 12 by the left front wall 12C and the right front wall 12D and the groove portion 12c extends along the insertion direction of the shift/select shaft 5. The protrusion portion 2d of this embodiment constitutes the guide portion.

According to the transmission 1 of this embodiment, the interlock plate 12 includes the groove portion 12c which extends along the insertion direction of the shift/select shaft 5 and the protrusion portion 2d enters the groove portion 12c before the shift/select shaft 5 engages with the engagement portion 2A when the shift/select shaft 5 is inserted into the transmission case 2 through the opening portion 2a.

That is, since the protrusion portion 2d enters the groove portion 12c of the interlock plate 12 before the shift/select shaft 5 engages with the first engagement portion or the second engagement portion to be the first engagement and the second engagement, it is possible to regulate a change in position or posture of the shift/select shaft 5 and the interlock plate 12.

Accordingly, it is possible to regulate a change in direction or rotational posture of the shift/select shaft 5 and the interlock plate 12 and to improve the assembly workability of the shift/select shaft 5 with respect to the transmission case 2.

Further, since it is possible to guide the shift/select shaft 5 to the engagement portion 2A while the protrusion portion 2d enters the groove portion 12c, it is possible to more effectively improve the assembly property of the shift/select shaft 5 to the transmission case 2.

### (Third embodiment)

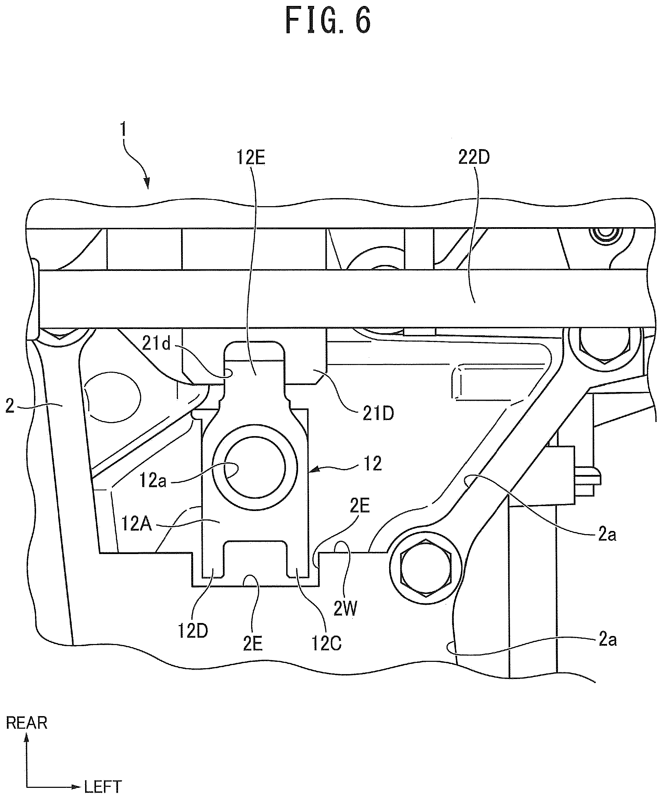

Fig. 6 is a view showing a vehicle transmission according to a third embodiment, which is part of this invention, wherein the same numbers are given to the same configurations as in the first embodiment, and the description thereof is omitted.

A groove portion 2E is formed in the front wall 2W of the transmission case 2 facing the interlock plate 12 and the groove portion 2E extends in the up and down direction along the axis O of the shift/select shaft 5 between the opening portion 2a and the engagement portion 2A in the up and down direction. The groove portion 2E of this embodiment constitutes the guide portion.

The left front wall 12C and the right front wall 12D are inserted into the groove portion 2E and the groove portion 2E sandwiches the left front wall 12C and the right front wall 12D from both left and right sides before the shift/select shaft 5 engages with the engagement portion 2A when the shift/select shaft 5 is inserted into the transmission case 2 through the opening portion 2a.

The left front wall 12C and the right front wall 12D of this embodiment constitute a convex portion protruding from the interlock plate 12 toward the front wall 2W of the transmission case.

According to the transmission 1 of this embodiment, the shift/select shaft 5 includes the left front wall 12C and the right front wall 12D protruding from the shift/select shaft 5 toward the front wall 2W of the transmission case 2 and the groove portion 2E sandwiches the left front wall 12C and the right front wall 12D from both left and right sides before the shift/select shaft 5 engages with the engagement portion 2A when the shift/select shaft 5 is inserted into the transmission case 2 through the opening portion 2a.

That is, since the groove portion 2E is sandwiched between the left front wall 12C and the right front wall 12D of the interlock plate 12 before the shift/select shaft 5 engages with the first engagement portion or the second engagement portion to be the first engagement and the second engagement, it is possible to regulate a change in position or posture of the shift/select shaft 5 and the interlock plate 12.

Accordingly, it is possible to regulate a change in direction or rotational posture of the shift/select shaft 5 and the interlock plate 12 and to improve the assembly workability of the shift/select shaft 5 with respect to the transmission case 2.

Further, since it is possible to guide the shift/select shaft 5 to the engagement portion 2A while the left front wall 12C and the right front wall 12D enter the groove portion 2E, it is possible to more effectively improve the assembly property of the shift/select shaft 5 to the transmission case 2.

The transmission 1 of this embodiment is composed of the AMT, but the transmission 1 may be composed of a MT (Manual Transmission).

Further, the interlock plate which comes into contact with the guide portion to be the second engagement is exemplified as the insertion component, but this invention is not limited thereto. For example, the insertion component may be composed of a plurality of components. That is, the contact of the guide portion and the second engagement may be achieved by one insertion component and the insertion component coming into contact with the guide portion and the second engagement may be achieved by different insertion components.

While embodiments of this invention have been described, it is apparent that some artisan could have made changes without departing from the scope of this invention. It is intended that any and all such modifications and equivalents are involved in the appended claims.

### (DESCRIPTION OF REFERENCE NUMERALS)

1 ... Transmission (vehicle transmission), 2 ... Transmission case, 2A ... Engagement portion (engagement portion), 2a ... Opening portion, 2B ... Guide wall (guide portion), 2b ... Lower end portion (lower end portion of guide portion), 2c ... Upper end portion (upper end portion of engagement portion), 2d ... Protrusion portion (guide portion), 2E ... Groove portion (guide portion), 2W ... Front wall (wall portion), 5 ... Shift/select shaft (insertion member, shaft member), 5a ... Lower end portion (lower end portion of insertion member), 12 ... Interlock plate (insertion component), 12C ... Left front wall (convex portion), 12D ... Right front wall (convex portion), 21d ... Notch groove of shift yoke (engagement portion), s ... Gap

## Claims

1. A vehicle transmission comprising:
a transmission case (2) having an opening portion (2a); and
an insertion member including a shift/select shaft (5) and an interlock plate (12), which is inserted into the transmission case through the opening portion, wherein
the transmission case includes: an engagement portion (2A) provided inside the transmission case and engaging with the insertion member ; and a guide portion (2B, 2d) provided inside the transmission case to be located closer to the opening portion than the engagement portion, **characterized in that**
the interlock plate (12) includes a groove portion (12c) extending along the insertion direction of the insertion member, and
the guide portion includes a guide wall (2B) and a protrusion portion (2d), the protrusion portion protruding from the guide wall toward the interlock plate (12) and entering the groove portion of the interlock plate (12),
wherein the interlock plate (12) extends in the up and down direction along the insertion direction of the insertion member, such that a change in posture of the insertion member is regulated in such a manner that the guide portion enters the groove portion (12c) and the insertion member comes into contact with the guide portion before the insertion member engages with the engagement portion when the insertion member is inserted into the transmission case through the opening portion.

2. A vehicle transmission comprising:
a transmission case (2) having an opening portion (2a); and
an insertion member including a shift/select shaft (5) and an interlock plate (12), which is inserted into the transmission case through the opening portion, wherein
the transmission case includes: an engagement portion (2A) provided inside the transmission case and engaging with the insertion member; and a guide portion (2E) provided inside the transmission case to be located closer to the opening portion than the engagement portion, **characterized in that** the interlock plate (12) includes a left front wall (12C) and a right front wall (12D), which constitutes a convex portion (12C, 12D) protruding from the interlock plate toward a wall portion (2W) of the transmission case, and
a groove portion (2E) constitutes the guide portion to sandwich the convex portion from both sides before the insertion member engages with the engagement portion when the insertion member is inserted into the transmission case through the opening portion, such that a change in posture of the insertion member is regulated in such a manner that the insertion member comes into contact with the guide portion before the insertion member engages with the engagement portion when the insertion member is inserted into the transmission case through the opening portion.

3. The vehicle transmission according to claim 1 or 2,
wherein a lower end portion of the guide portion and an upper end portion of the interlock plate (12) are located at the same height position.

4. The vehicle transmission according to any one of claims 1 to 3,
wherein the interlock plate (12) has a plane extending along the insertion direction of the insertion member, and
the guide portion has a plane extending in parallel to the plane of the interlock plate (12).

## Patentansprüche

1. Fahrzeuggetriebe, umfassend:
ein Getriebegehäuse (2), welches einen Öffnungsabschnitt (2a) aufweist; und
ein Einführelement, welches eine Schalt-/Auswahlwelle (5) und eine Verriegelungsplatte (12) umfasst, welche in das Getriebegehäuse durch den Öffnungsabschnitt eingeführt ist,
wobei das Getriebegehäuse umfasst: einen Eingriffsabschnitt (2A), welcher in dem Getriebegehäuse bereitgestellt ist und mit dem Einführelement in Eingriff steht; und einen Führungsabschnitt (2B, 2d), welcher in dem Getriebegehäuse bereitgestellt ist, um näher zu dem Öffnungsabschnitt angeordnet zu sein als der Eingriffsabschnitt,
**dadurch gekennzeichnet, dass** die Verriegelungsplatte (12) einen Nutabschnitt (12c) umfasst, welcher sich entlang der Einführrichtung des Einführelements erstreckt, und
der Führungsabschnitt eine Führungswand (2B) und einen Vorsprungsabschnitt (2d) umfasst, wobei der Vorsprungsabschnitt von der Führungswand in Richtung der Verriegelungsplatte (12) vorspringt und in den Nutabschnitt der Verriegelungsplatte (12) eintritt, wobei die Verriegelungsplatte (12) sich in der Oben- und Unten-Richtung entlang der Einführrichtung des Einführelements erstreckt, so dass eine Änderung der Stellung des Einführelements in einer Weise reguliert wird, dass der Führungsabschnitt in den Nutabschnitt (12c) eintritt und das Einführelement mit dem Führungsabschnitt in Kontakt tritt, bevor das Einführelement mit dem Eingriffsabschnitt in Eingriff tritt, wenn das Einführelement in das Getriebegehäuse durch den Öffnungsabschnitt eingeführt wird.

2. Fahrzeuggetriebe, umfassend:
ein Getriebegehäuse (2), welches einen Öffnungsabschnitt (2a) aufweist; und
ein Einführelement, welches eine Schalt-/Auswahlwelle (5) und eine Verriegelungsplatte (12) umfasst, welche in das Getriebegehäuse durch den Öffnungsabschnitt eingeführt ist,
wobei das Getriebegehäuse umfasst: einen Eingriffsabschnitt (2A), welcher in dem Getriebegehäuse bereitgestellt ist und mit dem Einführelement in Eingriff steht; und einen Führungsabschnitt (2E), welcher in dem Getriebegehäuse bereitgestellt ist, um näher zu dem Öffnungsabschnitt angeordnet zu sein als der Eingriffsabschnitt,
**dadurch gekennzeichnet, dass** die Verriegelungsplatte (12) eine linke vordere Wand (12C) und eine rechte vordere Wand (12D) umfasst, welche einen konvexen Abschnitt (12C, 12D) bildet, welcher von der Verriegelungsplatte in Richtung eines Wandabschnitts (2W) des Getriebegehäuses vorspringt, und
wobei ein Nutabschnitt (2E) den Führungsabschnitt bildet, um den konvexen Abschnitt von beiden Seiten sandwichartig aufzunehmen, bevor das Einführelement mit dem Eingriffsabschnitt in Eingriff tritt, wenn das Einführelement in das Getriebegehäuse durch den Öffnungsabschnitt eingeführt wird, so dass eine Änderung der Stellung des Einführelements in einer Weise reguliert wird, dass das Einführelement mit dem Führungsabschnitt in Kontakt tritt, bevor das Einführelement mit dem Eingriffsabschnitt in Eingriff tritt, wenn das Einführelement in das Getriebegehäuse durch den Öffnungsabschnitt eingeführt wird.

3. Fahrzeuggetriebe nach Anspruch 1 oder 2,
wobei ein unterer Endabschnitt des Führungsabschnitts und ein oberer Endabschnitt der Verriegelungsplatte (12) an der gleichen Höhenposition angeordnet sind.

4. Fahrzeuggetriebe nach einem der Ansprüche 1 bis 3,
wobei die Verriegelungsplatte (12) eine Ebene aufweist, welche sich entlang der Einführrichtung des Einführelements erstreckt, und
wobei der Führungsabschnitt eine Ebene aufweist, welche sich parallel zu der Ebene der Verriegelungsplatte (12) erstreckt.

## Revendications

1. Transmission de véhicule comprenant :
un carter de transmission (2) ayant une partie ouverture (2a) ; et
un élément d'insertion comportant un arbre de changement de vitesse/sélection (5) et une plaque d'interverrouillage (12), qui est inséré dans le carter de transmission à travers la partie ouverture,
dans laquelle le carter de transmission comporte : une partie de mise en prise (2A) prévue à l'intérieur du carter de transmission et en prise avec l'élément d'insertion ; et
une partie de guidage (2B, 2d) prévue à l'intérieur du carter de transmission pour être située plus près de la partie ouverture que la partie de mise en prise, **caractérisée en ce que** la plaque d'interverrouillage (12) comporte une partie rainure (12c) s'étendant le long de la direction d'insertion de l'élément d'insertion, et
la partie de guidage comporte une paroi de guidage (2B) et une partie saillie (2d), la partie saillie faisant saillie depuis la paroi de guidage vers la plaque d'interverrouillage (12) et entrant dans la partie rainure de la plaque d'interverrouillage (12),
dans laquelle la plaque d'interverrouillage (12) s'étend de haut en bas le long de la direction d'insertion de l'élément d'insertion, de sorte qu'un changement de position de l'élément d'insertion soit régulé de manière à ce que la partie de guidage entre dans la partie rainure (12c) et que l'élément d'insertion entre en contact avec la partie de guidage avant que l'élément d'insertion ne vienne en prise avec la partie de mise en prise lorsque l'élément d'insertion est inséré dans le carter de transmission à travers la partie ouverture.

2. Transmission de véhicule comprenant :
un carter de transmission (2) ayant une partie ouverture (2a) ; et
un élément d'insertion comportant un arbre de changement de vitesse/sélection (5) et une plaque d'interverrouillage (12), qui est inséré dans le carter de transmission à travers la partie ouverture,
dans laquelle le carter de transmission comporte : une partie de mise en prise (2A) prévue à l'intérieur du carter de transmission et en prise avec l'élément d'insertion ; et une partie de guidage (2E) prévue à l'intérieur du carter de transmission pour être située plus près de la partie ouverture que la partie de mise en prise, **caractérisée en ce que** la plaque d'interverrouillage (12) comporte une paroi avant gauche (12C) et une paroi avant droite (12D), qui constituent une partie convexe (12C, 12D) faisant saillie depuis la plaque d'interverrouillage vers une partie paroi (2W) du carter de transmission, et
une partie rainure (2E) constitue la partie de guidage pour coincer la partie convexe des deux côtés avant que l'élément d'insertion ne vienne en prise avec la partie de mise en prise lorsque l'élément d'insertion est inséré dans le carter de transmission à travers la partie ouverture, de sorte qu'un changement de position de l'élément d'insertion soit régulé de manière à ce que l'élément d'insertion entre en contact avec la partie de guidage avant que l'élément d'insertion ne vienne en prise avec la partie de mise en prise lorsque l'élément d'insertion est inséré dans le carter de transmission à travers la partie ouverture.

3. Transmission de véhicule selon la revendication 1 ou 2,
dans laquelle une partie extrémité inférieure de la partie de guidage et une partie extrémité supérieure de la plaque d'interverrouillage (12) sont situées à la même position de hauteur.

4. Transmission de véhicule selon l'une quelconque des revendications 1 à 3,
dans laquelle la plaque d'interverrouillage (12) a un plan s'étendant le long de la direction d'insertion de l'élément d'insertion, et
la partie de guidage a un plan s'étendant parallèlement au plan de la plaque d'interverrouillage (12).
